## Europäisches Patentamt

## European Patent Office

## Office européen des brevets

(11) Numéro de publication: **0 143 047**
**B1**

(12) **FASCICULE DE BREVET EUROPEEN**

(45) Date de publication du fascicule du brevet: **11.05.88**

(51) Int. Cl.⁴: **H 04 N 5/335,** H 04 N 3/15

(21) Numéro de dépôt: **84402303.6**

(22) Date de dépôt: **13.11.84**

(54) Dispositif photosensible pour l'infra-rouge.

(30) Priorité: **15.11.83 FR 8318126**

(43) Date de publication de la demande:
**29.05.85 Bulletin 85/22**

(45) Mention de la délivrance du brevet:
**11.05.88 Bulletin 88/19**

(84) Etats contractants désignés:
**DE GB NL SE**

(56) Documents cités:
**GB-A-2 079 093**

**ELECTRONICS LETTERS, vol. 18, no. 7, 1er avril 1982, pages 285-287, Londres, GB; R.A. BALLINGALL et al.: "Electronically scanned CMT detector array for the 8-14 mum band"**

(73) Titulaire: **THOMSON-CSF**
**173, Boulevard Haussmann**
**F-75379 Paris Cédex 08 (FR)**

(72) Inventeur: **Arques, Marc**
**THOMSON-CSF SCPI 173, bld Haussmann**
**F-75379 Paris Cedex 08 (FR)**
Inventeur: **Munier, Bernard**
**THOMSON-CSF SCPI 173, bld Haussmann**
**F-75379 Paris Cedex 08 (FR)**

(74) Mandataire: **Mayeux, Michèle et al**
**THOMSON-CSF SCPI 19, avenue de Messine**
**F-75008 Paris (FR)**

(56) Documents cités:
**PATENTS ABSTRACTS OF JAPAN, vol. 7, no. 178(E-191)1323r, 6 aou7t 1983, page 72E191 MICROELECTRONICS JOURNAL, vol. 10, no. 1, mai/juin 1979, pages 37-44, Mackintosh Publications Ltd., Luton, US; C. TASSELL et al.: "Photodiode arrays-characteristics and applications"**

Courier Press, Leamington Spa, England.

EP 0 143 047 B1

# Description

La présente invention concerne un dispositif photosensible pour l'infra-rouge.

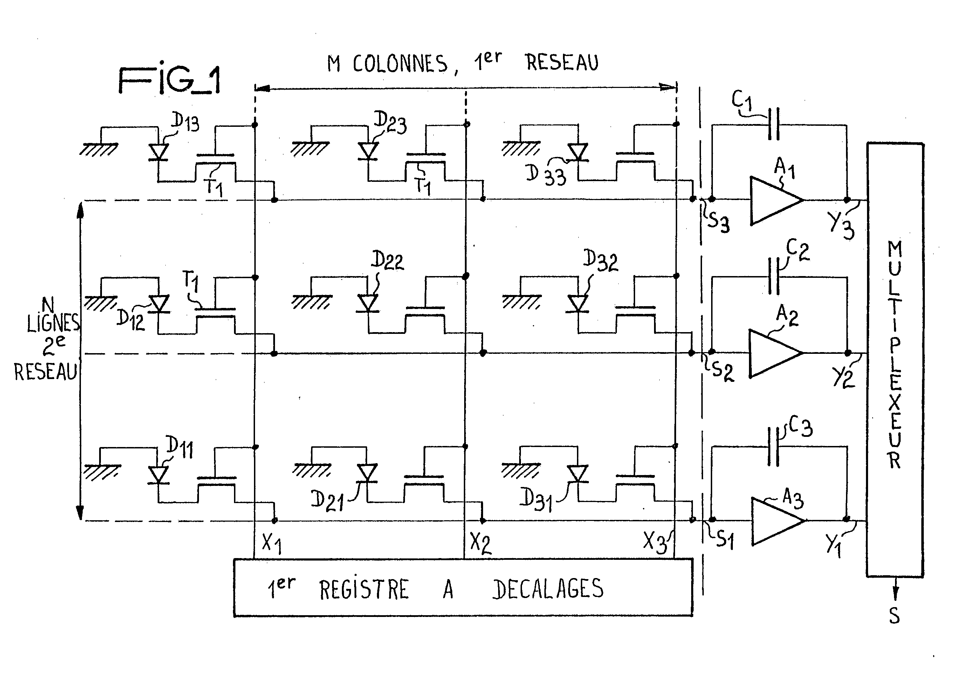

Par l'article intitulé "Electronically scanned C.M.T. detector array for the 8—14 µm band" paru dans la revue "Electronics Letters", du ler avril 1982, volume 18, numéro 7, pages 285 à 287, on connait un dispositif photosensible pour l'infra-rouge qui va être décrit en se référant à la figure 1 annexée à la présente description.

Ce dispositif comporte un réseau de N lignes et M colonnes de détecteurs infra-rouges intégrés sur un substrat semi-conducteur. Les détecteurs $D_{11}$, $D_{21}$, $D_{31}$..., $D_{12}$, $D_{22}$, $D_{32}$... sont des photodiodes, intégrées sur un substrat semi-conducteur en cadmium, mercure et tellurure (C.M.T.). A chaque photodiode est associée un transistor MOS $T_1$. On voit sur la figure 1 que l'anode de chaque photodiode est reliée à la masse et sa cathode à un transistor MOS $T_1$. Un premier réseau d'électrodes verticales relie les grilles des transistors MOS associés aux détecteurs d'une même colonne. Un second réseau d'électrodes horizontales relie les transistors MOS associés aux détecteurs d'une même ligne. Un premier registre à décalages permet d'adresser successivement chaque électrode du premier réseau. Lorsqu'une électrode du premier réseau est adressée, il y a intégration des charges correspondant au rayonnement infra-rouge, reçu par les détecteurs reliés à cette électrode, par exemple les détecteurs $D_{11}$, $D_{12}$, $D_{13}$ sur la figure 1. L'intégration des charges se fait par des amplificateurs opérationnels montés en intégrateurs, avec une capacité $C_1$, $C_2$, $C_3$ entre leur entrée négative et leur sortie, et qui sont reliés à chaque électrode du second réseau Un multiplexeur reçoit les sorties des amplificateurs en fournit un signal 5 de lecture en série des charges intégrées dans les détecteurs d'une colonne. L'intégration des charges des détecteurs $D_{21}$, $D_{22}$, $D_{23}$ de la colonne suivante commence ensuite.

Les premiers transistors MOS $T_1$ ainsi que le premier registre à décalages sont intégrés sur un substrat semi-conducteur en silicium qui est interconnecté avec le substrat portant les détecteurs infra-rouge. Les premiers transistors MOS $T_1$ et le premier registre à déculages sont placés dans le même cryostat porté à 77K que les détecteurs infra-rouge.

Le problème qui se pose et que la présente invention permet de résoudre, est que les amplificateurs opérationnels montés en intégrateurs ne peuvent pas être placés à l'intérieur du cryostat. Comme leur consommation, et donc leur température sont élevées, cela poserait des difficultés de les mettre dans le cryostat. De plus, à cause de cette consommation élevée, ils sont réalisés en composants discrets et sont encombrants.

La conséquence est qu'il faut établir de nombreuses connexions entre le crystat et le reste du dispositif. De plus, les connexions entre le cryostat et les amplificateurs opérationnels transportent des signaux à bas niveau, et sensibles aux parasites.

La présente invention permet de résoudre ce problème. Elle concerne un dispositif photosensible pour l'infra-rouge ayant un fonctionnement comparable à celui du dispositif décrit dans l'article cité, mais dans lequel le cryostat ne comporte qu'une seule sortie, à fort niveau de tension et basse impédance.

Selon la revendication 1, la présente invention concerne un dispositif photosensible pour l'infra-rouge comportant:

—un réseau de N lignes et M colonnes de détecteurs infra-rouges intégrés sur un premier substrat semi-conducteur;

—un premier transistor MOS relié à chaque détecteur et à deux réseaux d'électrodes, l'un des réseaux reliant les transistors MOS associés aux détecteurs d'une même ligne et l'autre ceux associés aux détecteurs d'une même colonne, et un premier registre à décalage, qui adresse l'une après l'autre les électrodes d'un premier réseau, les transistors MOS et le registre étant intégrés sur un second substrat semi-conducteur et placés dans un cryostat avec les détecteurs;

—des moyens reliés à chaque électrode du second réseau qui assurent l'intégration des charges correspondant au rayonnement reçu par les détecteurs reliés à chacune des électrodes du premier réseau et qui assurent la lecture en série des charges intégrées, caractérisé en ce que ces moyens comportent, intégrés dans le second substrat semi-conducteur et placés dans le cryostat:

—deux capacités et un second transistor MOS, reliés à chaque électrode du second réseau, la première capacité assurant l'integration des charges puis le second transistor MOS reliant la première et la deuxième capacité pour que les charges se répartissent sous la première et la deuxième capacité;

—des moyens assurant la lecture en série du niveau des charges dans les deuxièmes capacités, alors que se produit dans les premières capacités l'intégration des charges des détecteurs reliés à l'électrode suivante du premier réseau.

D'autres objets, caractéristiques, et résultats de l'invention ressortiront de la description suivante, donnée à titre d'exemple non limitatif et illustrée par les figures annexées qui représentent:

—la figure 1, le schéma d'un dispositif photosensible pour l'infra-rouge selon l'art antérieur;

—la figure 2, le schéma d'un mode de réalisation des moyens d'intégration et de lecture selon l'invention;

—les figures 3a à h, un exemple de réalisation de signaux de commande du dispositif selon l'invention;

—les figures 4a à g, une vue en coupe transversale d'un mode de réalisation du dispositif selon l'invention et des schémas expliquant sont fonctionnement.

Sur les différentes figures, les mêmes repères désignent les mêmes éléments, mais, pour des raisons de clarté, les cotes et proportions de divers éléments ne sont pas respectées.

La figure 1 a été décrite dans l'introduction à la description.

Sur la figure 1, une ligne verticale en pointillés sépare les éléments de gauche-détecteurs, premiers transistors MOS, premier regitre à décalages—qui sont placés dans le cryostat, des éléments de droite—moyens d'intégration et de lecture, qui sont situés hors du cryostat.

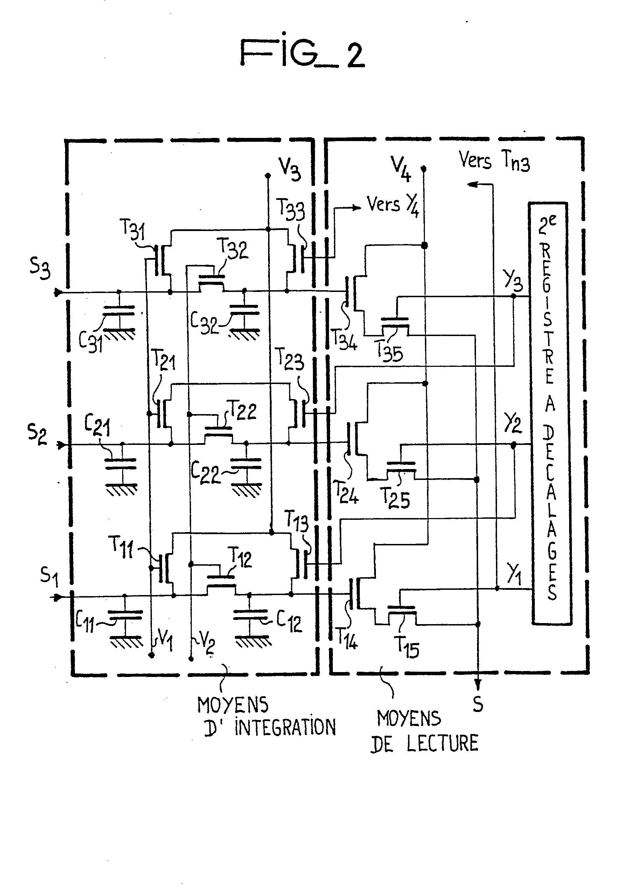

La figure 2 représente le schéma d'un mode de réalisation selon l'invention des moyens d'intégration et de lecture qui sont placés dans le cryostat et intégrés sur le même substrat semi-conducteur que les premiers transistors MOS $T_1$ et le premier registre à décalages. Le reste du dispositif photosensible est le même que sur la figure 1.

Chaque électrode du second réseau $S_1$, $S_2$, $S_3$...—il s'agit sur les figures de lignes mais cela pourrait aussi bien être des colonnes—est reliée à deux capacités et à une second transistor MOS. Ainsi l'électrode $S_1$ est reliée à une première capacité $C_{11}$, connectée entre $S_1$ et un potentiel de référence qui peut être celui du substrat semi-conducteur portant les moyens d'intégration et de lecture. Sur les figures, ce potentiel est représenté par le symbole "masse" habituel. Un second transistor MOS $T_{12}$, sépare la première capacité $C_{11}$ d'une seconde capacité $C_{12}$, connectée entre une électrode du transistor $T_{12}$ et le potentiel de référence. Les autres électrodes $S_2$, $S_3$... sont reliées à des capacités $C_{21}$, $C_{22}$, $C_{31}$, $C_{32}$... et à des seconds transistors MOS $T_{22}$ $T_{32}$....

Une même tension de commande $V_2$ est appliquée aux grilles des seconds transistors MOS.

Les charges provenant des détecteurs d'une même colonne sont simultanément intégrées dans les premières capacités puis les seconds transistors MOS relient les premières et les secondes capacités et le niveau des charges est lu dans les secondes capacités, alors que commence l'intégration dans les premières capacités des charges de détecteurs de la colonne suivante.

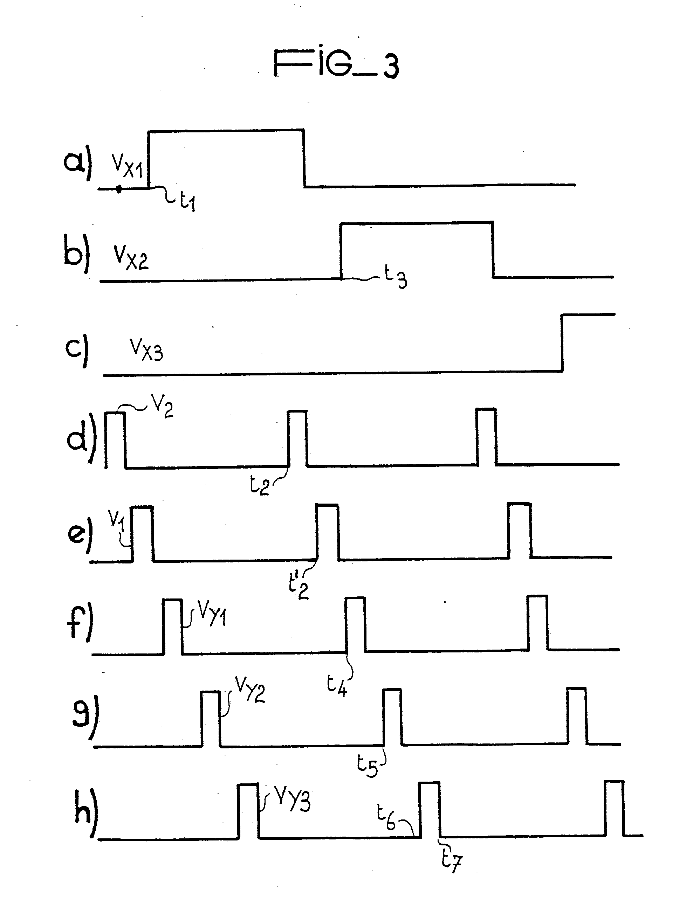

Sur les figures 3a à h, on a représenté un mode de réalisation des signaux de commande du dispositif selon l'invention.

Les figures 3a, b, c montrent les tensions $V_{x1}$, $V_{x2}$, $V_{x3}$, appliqués aux colonnes $X_1$, $X_2$, $X_3$ par le premier registre à décalage. Chacune de ces tensions passe périodiquement au niveau haut. Chacune des colonnes $X_1$, $X_2$, $X_3$... est donc successivement adressée.

Ainsi, au temps $t_1$, le passage au niveau haut de $V_{x1}$ provoque la conduction des premiers transistors MOS $T_1$ de la première colonne de détecteurs $X_1$. Les charges créées dans ces détecteurs par le rayonnement infra-rouge incident sont stockées dans les premières capacités, $C_{11}$, $C_{21}$, $C_{31}$....

Au temps $t_2$, le passage au niveau haut de la tension de commande $V_2$ —figure 3d— provoque la conduction des seconds transistors MOS $T_{12}$,

$T_{22}$, $T_{32}$.... Les premières et les secondes capacités sont reliés et les charges de chaque première capacité se répartissent sous la première et la deuxième capacité.

Au temps $t_3$, le passage au niveau haut de $V_{x2}$ provoque l'intégration dans les premières capacités $C_{11}$, $C_{21}$, $C_{31}$ des charges des détecteurs de la deuxième colonne $X_2$, et ainsi de suite les charges d'une colonne de détecteurs sont intégrées alors que les charges de la colonne précédente sont lues.

Sur la figure 2, les moyens d'intégration que l'on vient de décrire, sont reliés à des moyens de lecture qui comportent, pour chaque ligne, un troisième et un quatrième transistors MOS, $T_{14}$ et $T_{15}$, $T_{24}$ et $T_{25}$.... Les troisièmes transistors MOS sont montés en suiveur et reliés aux deuxièmes capacités par leur grille. Les quatrième transistors MOS ont leur grille reliée aux sorties $Y_1$, $Y_2$, $Y_3$... du second registre à décalages et sont connectés entre un troisième transistor MOS et la sortie à haut niveau S du dispositif.

Sur les figures 3f, g, h, on a représenté les tensions $V_{y1}$, $V_{y2}$, $V_{y3}$ aux sorties $Y_1$, $Y_2$, $Y_3$ du second registre à décalages.

Au temps $t_4$, le passage au niveau haut de $V_{y1}$ provoque la conduction du quatrième transistor MOS $T_{15}$ qui fournit sur la sortie S le signal de lecture des charges intégrées par le détecteur $D_{11}$. Au temps $t_5$ commence la lecture des charges intégrées par le détecteur $D_{12}$, et au temps $t_6$ celle des charges intégrées par le détecteur $D_{13}$, alors que se produit depuis le temps $t_3$ l'intégration des charges provenant des détecteurs $D_{21}$, $D_{22}$, $D_{23}$... dans les premières capacités.

On a également représenté sur la figure 2 des transistors permettant la remise à niveau des premières et deuxièmes capacités.

Il s'agit des transistors $T_{11}$ et $T_{13}$ pour la première ligne $S_1$, $T_{21}$ et $T_{23}$ pour la deuxième ligne $S_2$.... Ces transistors sont reliés à l'une des capacités et à une tension de commande constante $V_3$. La grille des transistors connectés aux premières capacités est commandée par un signal de commande en créneaux $V_1$, représenté sur la figure 3e. La grille des transistors connectés aux secondes capacités est reliée à une sortie du deuxième registre de lecture par exemple le transistor $T_{13}$ reçoit le signal de commande $V_{y2}$, le transistor $T_{23}$ le signal de commande $V_{y3}$... et ainsi de suite.

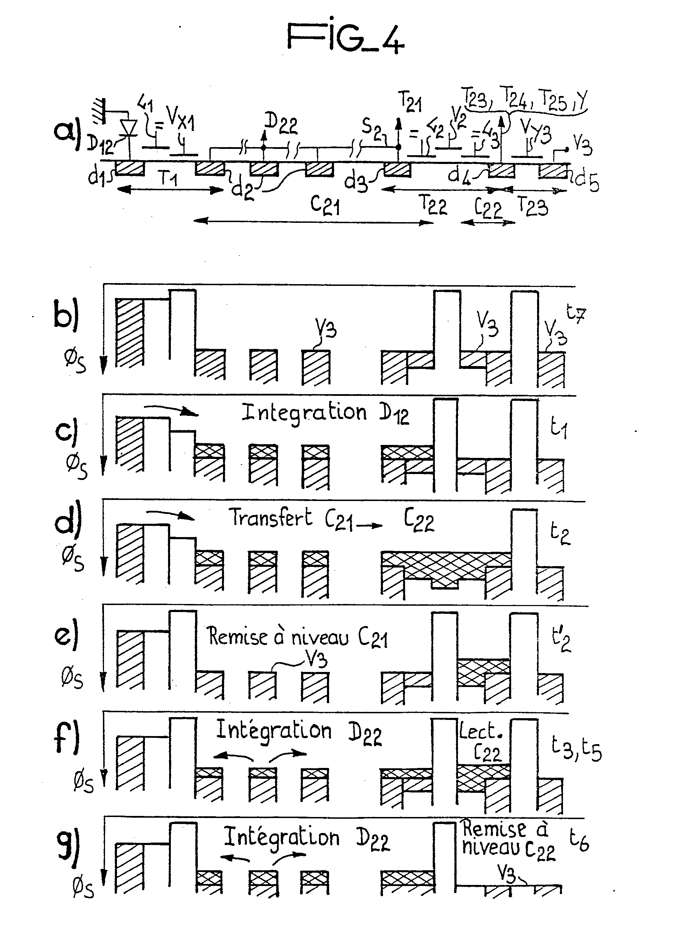

La figure 4a est une vue en coupe transversale réalisée dans le substrat semi-conducteur, en silicium de type P par exemple, sur lequel est intégré un mode de réalisation du dispositif selon l'invention, excepté les photodétecteurs.

Cette coupe a été effectuée au niveau des éléments reliés à la photodiode $D_{12}$.

Cette photodiode a son anode reliée à un potentiel de référence, représenté sur la figure par le symbole "masse" et sa cathode reliée à un premier transistor MOS $T_1$ constitué de deux diodes $d_1$, $d_2$, et de deux grilles. La première grille $G_1$ est portée à un potentiel constant et contribue à la polarisation de la photodiode. La deuxième grille reçoit le signal $V_{X1}$ provenant du premier registre à décalages.

Une électrode horizontale relie les diodes $d_2$ des transistors $T_1$ d'une même ligne. Cette connexion aboutit à une diode $d_3$ qui fait partie du transistor MOS $T_{22}$. Ce transistor comporte trois grilles, une grille $G_2$ et une grille $G_3$ à un potentiel constant qui entourent une grille qui reçoit le signal de commande $V_2$.

Le transistor $T_{23}$ fait suite au transistor $T_{22}$, sa grille reçoit le signal de commande $V_{Y3}$, et il comporte la diode $d_4$, commune avec le transistor $T_{22}$, et une diode $d_5$ qui reçoit le signal $V_3$.

La première capacité $C_{21}$ est constituée par les capacités de toutes les diodes $d_2$ des transistors $T_1$ de la deuxième ligne, plus la capacité sous la diode $d_3$ et la grille $G_2$.

La seconde capacité $C_{22}$ est constituée par les capacités sous la grille $G_3$ et la diode $d_4$.

Sur la figure 4a, on n'a pas représenté le transistor $T_{21}$ relié à $d_3$, les transistors $T_{23}$, $T_{24}$, $T_{25}$ et le second registre à décalages qui sont reliés à $d_4$.

Les figures 4b à g montrent l'évolution des potentiels de surface dans le substrat semi-conducteur au cours du temps.

La figure 4b montre la situation avant toute intégration. Les capacités $C_{21}$, $C_{22}$ et la diode $d_5$ sont au potentiel $V_3$.

Au temps $t_1$—figure 4c—le signal $V_{X1}$ passe au niveau haut, le premier TMOS $T_1$ conduit, et les charges en provenance de la photodiode $D_{12}$ sont accumulées dans la capacité $C_{21}$.

Au temps $t_2$—figure 4d—le signal $V_2$ passe au niveau haut, le transistor $T_{22}$ conduit, et le même niveau de potentiel s'établit entre les capacités $C_{21}$ et $C_{22}$. Il y a transfert d'une partie des charges stockées dans la capacité $C_{21}$ sous la capacité $C_{22}$ pour obtenir le même niveau de charges dans la capacité $C_{22}$.

Au temps $t'_2$—figure 4e—le signal $V_{X1}$ est au niveau bas, le transistor MOS $T_1$ est bloqué, l'intégration des charges provenant de la photodiode $D_{12}$ est terminée. Le signal $V_2$ est au niveau bas, le transistor MOS $T_{22}$ est bloqué, et les capacités $C_{12}$ et $C_{22}$ sont séparées. Le signal $V_1$ passe au niveau haut—figure 3e—le transistor $T_{21}$ conduit et remet au potentiel $V_3$ la première capacité $C_{21}$.

Au temps $t_3$—voir figure 4f—le signal $V_{X2}$ passe au niveau haut. L'intégration des charges provenant de la photodiode $D_{22}$ qui n'est pas représenté commence.

Au temps $t_5$, le signal $V_{Y2}$ passe au niveau haut. Le transistor $T_{25}$ conduit et le niveau des charges dans la capacité $C_{22}$ est lu par le transistor $T_{24}$.

Au temps $t_6$, le signal $V_{Y3}$ passe au niveau haut, le transistor $T_{23}$ conduit et provoque la remise au niveau $V_3$ de la capacité $C_{22}$, alors que l'intégration des charges se poursuit dans la capacité $C_{21}$.

Il est possible de remettre à niveau les secondes capacités simultanément et une fois que toutes les secondes capacités on été lues.

Selon une variante de l'invention, les moyens de lecture peuvent être constitués par un registre à décalages à transfert de charge à entrées parallèles et sortie série. Ce registre est alors intégré dans le substrat semi-conducteur à la suite des transistors $T_{21}$, $T_{22}$.... On n'utilise pas dans ce cas le deuxième registre à décalages ni les transistors $T_{14}$, $T_{15}$, $T_{24}$, $T_{25}$....

Les charges sont transférés dans le registre à transfert de charge jusqu'à un dispositif de lecture des charges dont la sortie constitue la sortie à haut niveau du dispositif photosensible.

On peut soit établir le même niveau de charges entre les premières et les deuxièmes capacités, puis entre les deuxièmes capacités et le registre à transfert de charge, soit établir simultanément le même niveau de charges entre les premières capacités et le registre à transfert de charge. Dans ce cas les secondes capacités sont essentiellement constitués par les capacités des électrodes de stockage du registre à transfert de charge.

Les détecteurs sensibles à l'infra-rouge peuvent être des photodiodes comme sur les figures ou un autre type de détecteurs infra-rouge, tel que par exemple un détecteur du type grille-isolant semi-conducteur.

Dans le cas de photodiodes, elles peuvent être reliées soit à une diode réalisée sur le second substrat semi-conducteur, comme sur les figures, soit à une grille réalisée sur ce second substrat sans que le fonctionnement du dispositif selon l'invention soit modifié. Les photodiodes peuvent être par exemple reliées à une grille d'un premier transistor MOS $T_1$ ayant une autre grile reliée par une électrode commune aux transistors $T_1$ d'une même colonne.

De même les photo-détecteurs et le reste du dispositif sont intégrés sur des substrats semiconducteurs différrents, et bien adaptés. Par exemple pour les photo-détecteurs de l'antimoniure d'indium, du tellurure d'étain et de plomb, du tellure de cadmium et de mercure.... Le reste du dispositif est intégré par exemple sur un substrat semi-conducteur en silicium de type P ou N.

Enfin, il est bien entendu que les rôles des électrodes du premier et du second réseau d'électrodes peuvent être inversés sans problème, c'est-à-dire que le premier registre à décalages peut être relié aux électrodes du premier réseau et les moyens d'intégration et de lecture selon l'invention aux électrodes du second réseau.

**Revendications**

1. Dispositif photosensible pour l'infra-rouge comportant:

—un réseau de N lignes et M colonnes de détecteurs infra-rouge ($D_{11}$, $D_{12}$, $D_{13}$...) intégrés sur un premier substrat semi-conducteur,

—un premier transistor MOS ($T_1$) relié à chaque détecteur et à deux réseaux d'électrodes, l'un des réseaux reliant les transistors MOS associés aux détecteurs d'une même ligne et l'autre ceux associés aux détecteurs d'une même colonne, et un premier registre à décalage, qui adresse l'une après l'autre les électrodes d'un premier réseau, les transistors MOS et le registre étant intégrés sur un second substrat semi-conducteur et placés dans un cryostat avec les détecteurs;
—des moyens reliés à chaque électrode du second réseau ($S_1$, $S_2$, $S_3$...) qui assurent l'intégration des charges correspondant au rayonnement reçu par les détecteurs reliés à chacune des électrodes du premier réseau et qui assurent la lecture en série des charges intégrées, caractérisé en ce que ces moyens comportent, intégrés dans le second substrat semi-conducteur et placés dans le cryostat:
—deux capacités ($C_{11}$, $C_{12}$, $C_{21}$, $C_{22}$...) et un second transistor MOS ($T_{12}$, $T_{22}$, $T_{32}$...), reliés à chaque électrode du second réseau ($S_1$, $S_2$, $S_3$...), la première capacité ($C_{11}$, $C_{21}$, $C_{31}$...) assurant l'intégration des charges puis le second transistor MOS ($T_{12}$, $T_{22}$, $T_{32}$...) reliant la première et la deuxième capacité ($C_{12}$, $C_{22}$, $C_{32}$...) pour que les charges se répartissent sous la première et la deuxième capacité,
—des moyens assurant la lecture en série du niveau des charges dans les deuxièmes capacités, ($C_{12}$, $C_{22}$, $C_{32}$)..., alors que se produit dans les premières capacités l'intégration des charges des détecteurs ($D_{21}$, $D_{22}$, $D_{23}$...) reliés à l'électrode suivante du premier réseau.

2. Dispositif selon la revendication 1, caractérisé en ce qu'il comporte des moyens ($T_{11}$, $T_{13}$, $T_{21}$, $T_{23}$...) assurant la remise à niveau des premières et des secondes capacités ($C_{11}$, $C_{12}$, $C_{21}$, $C_{22}$...), ces remises à niveau ayant lieu pour les premières capacités ($C_{11}$, $C_{21}$, $C_{31}$...) après qu'elles aient été reliées aux secondes capacités et pour les secondes capacités ($C_{12}$, $C_{22}$, $C_{32}$...) après que le niveau des charges dans ces secondes capacités ait été lu.

3. Dispositif selon la revendication 2, caractérisé en ce que ces moyens sont constitués par un transistor MOS ($T_{11}$, $T_{13}$, $T_{21}$, $T_{23}$) relié à chaque capacité ($C_{11}$, $C_{12}$, $C_{21}$, $C_{23}$...).

4. Dispositif selon l'une des revendications 1 à 3, caractérisé en ce que les moyens assurant la lecture en série des charges contenues dans les deuxièmes capacités ($C_{12}$, $C_{22}$, $C_{32}$...) sont constitués par:
—un second registre à décalages;
—un troisième transistor MOS ($T_{14}$, $T_{24}$...) monté en suiveur qui est relié à chaque seconde capacité ($C_{12}$, $C_{22}$...) et à un quatrième transistor MOS ($T_{15}$, $T_{25}$...), chaque quatrième transistor MOS ($T_{15}$, $T_{25}$...) étant adressé périodiquement par le second registre à décalage et ayant une électrode commune avec les autres quatrième transistors MOS constituant la sortie (S) du dispositif.

5. Dispositif selon l'une des revendications 1 à 3 caractérisé en ce que les moyens assurant la lecture en série des charges sont constitués par un registre à décalage à transfert de charge dans lequel les charges sont transférées jusqu'à un dispositif de lecture des charges fournissant la sortie (S) du dispositif photosensible.

6. Dispositif selon la revendication 5, caractérisé en ce que le même niveau de charges est établi simultanément entre les premières capacités ($C_{11}$, $C_{21}$...) et le registre à transfert de charge, les secondes capacités étant essentiellement constituées par les capacités des électrodes de stockage du registre à transfert de charge.

7. Dispositif selon la revendication 5, caractérisé en ce que le même niveau de charges est établi entre les premières ($C_{11}$, $C_{21}$...) et les deuxièmes ($C_{12}$, $C_{22}$...) capacités, puis entre les deuxièmes capacités et le registre à transfert de charge.

**Patentansprüche**

1. Lichtempfindliche Infrarot-Anordnung, mit
—einem auf einem Halbleitersubstrat integrierten N-zeiligen un- M-spaltigen Netz aus Infrarotdetektoren ($D_{11}$, $D_{12}$, $D_{13}$...),
—einem ersten an einen jeweiligenen Detektor und an zwei Elektrodenscharen angeschlossenen MOS-Transistor ($T_1$), wobei die eine Schar die zu den Detektoren einer gemeinsamen Zeile gehörenden MOS Transistoren und die andere Schar die zu den Detektoren einer gemeinsamen Spalte gehörenden MOS-Transistoren verbindet, wobei ein erstes Schieberegister nacheinander die Elektroden einer ersten Schar adressiert und die MOS-Transistoren und das Register auf einen zweiten Halbleitersubstrat integriert und zusammen mit den Detektoren in einem Kryostaten untergebracht sind;
—an jede Elektrode der zweiten Schar ($S_1$, $S_2$, $S_3$...) angeschlossenen Mitteln, welche die Integration der der Strahlung entsprechenden Ladungen bewirken, die von den an jede der Elektroden der ersten Schar angeschlossenen Detektoren empfangen wird und die das serielle Lesen der integrierten Ladungen bewirken, dadurch gekennzeichnet, daß diese Mittel integriert auf dem zweiten Halbleitersubstrat und im Kryostaten untergebracht umfassen:
—zwei Kondensatoren ($C_{11}$, $C_{12}$, $C_{21}$, $C_{22}$...) und einen zweiten MOS-Transistor ($T_{12}$, $T_{22}$, $T_{32}$...), die mit jeder Elektrode der zweiten Schar ($S_1$, $S_2$, $S_3$...) verbunden sind, wobei der erste Kondensator ($C_{11}$, $C_{21}$, $C_{31}$...) die Ladungen integriert und der zweite MOS-Transistor ($T_{12}$, $T_{22}$, $T_{32}$...) den ersten Kondensator und den zweiten Kondensator ($C_{12}$, $C_{22}$, $C_{32}$...) miteinander verbindet, so daß sich die Ladungen unter dem ersten und den zweiten Kondensatoren verteilen,
—Mittel zu seriellen Lesen des Ladungspegels in den zweiten Kondensatoren ($C_{12}$, $C_{22}$, $C_{32}$...), während in den ersten Kondensatoren die Integration de Ladungen der Detektoren ($D_{21}$, $D_{22}$, $D_{23}$...) erfolgt, die mit der nachfolgenden Elektrode der ersten Schar verbunden sind.

2. Anordnung nach Anspruch 1, dadurch gekennzeichnet, daß Mittel ($T_{11}$, $T_{13}$, $T_{21}$, $T_{23}$...) zur Rückstellung der ersten und zweiten Kondensatoren ($C_{11}$, $C_{12}$, $C_{21}$, $C_{22}$...) vorgesehen sind, wobei diese Rückstellung im Falle der ersten Kondensatoren ($C_{11}$, $C_{21}$, $C_{31}$...) stattfindet, nachdem diese an die zweiten Kondensatoren angeschlossen wurden, und im Falle der zweiten Kondensatoren

(C$_{12}$, C$_{22}$, C$_{32}$...) erfolgt, nachdem der Pegel der Ladungen in diesen zweiten Kondensatoren gelesen wurde.

3. Anordnung nach Anspruch 2, dadurch gekennzeichnet, daß die Mittel aus einem MOS-Transistor (T$_{11}$, T$_{13}$, T$_{21}$, T$_{23}$...) bestehen, der an jeden Kondensator (C$_{11}$, C$_{12}$, C$_{21}$, C$_{23}$...) angeschlossen ist.

4. Anordnung nach einem der Ansprüche 1 bis 3, dadurch gekennzeichnet, daß die Mittel zum seriellen Lesen der in den zweiten Kondensatoren (C$_{12}$, C$_{22}$, C$_{32}$...) vorhandenen Ladungen bestehen aus:

—einem zweiten Schieberegister,

—einem dritten, als Folgestufe geschalteten MOS-Transistor (T$_{14}$, T$_{24}$...), welcher mit jedem zweiten Kondensator (C$_{12}$, C$_{22}$...) und einem vierten MOS-Transistor (T$_{15}$, T$_{25}$...) verbunden ist, wobei jeder vierte MOS-Transistor (T$_{15}$, T$_{25}$...) periodisch von dem zweiten Schieberegister adressiert wird und mit den anderen vierten MOS-Transistoren eine gemeinsame Elektrode besitzt, die den Ausgang (S) der Anordnung bildet.

5. Anordnung nach einem der Ansprüche 1 bis 3, dadurch gekennzeichnet, daß die das serielle Lesen der Ladungen bewirkenden Mittel aus einem Ladungstransfer-Schieberegister bestehen, in welchem die Ladungen bis zu einer Ladungsleseanordnung transferiert werden, welches den Ausgang (S) der lichtempfindlichen Anordnung bildet.

6. Anordnung nach Anspruch 5, dadurch gekennzeichnet, daß zwischen den ersten Kondensatoren (C$_{11}$, C$_{21}$...) und dem Ladungstransferregister gleichzeitig, der gleiche Ladungspegel hergestellt wird, wobei die zweiten Kondensatoren im wesentlichen aus den Kapazitäten der Speicherelektroden des Ladungstransferregisters bestehen.

7. Anordnung nach Anspruch 5, dadurch gekennzeichnet, daß zwischen den ersten (C$_{11}$, C$_{21}$...) und den zweiten (C$_{12}$, C$_{22}$...) Kondensatoren, der gleiche Ladungspegel hergestellt wird, und dann zwischen den zweiten Kondensatoren und dem Ladungstransferregister.

## Claims

1. A photosensitive infrared arrangement comprising:

—a network of infrared detectors (D$_{11}$, D$_{12}$, D$_{13}$...) arranged in N lines and M columns and integrated on a first semiconductor substrate,

—a first MOS transistor (T$_1$) connected to each detector and to two electrode sets, one of the sets interconnecting the MOS transistors associated to the detectors of a common line and the other interconnecting the MOS transistors associated to the detectors of a common column, and a first shift register, which addresses the electrodes of a first set one after the other, the MOS transistors and the register being integrated on a second semiconductor substrate and placed in a cryostat together with the detectors,

—means connected to each electrode of the second set (S$_1$, S$_2$, S$_3$...) which ensure the integration of the charges corresponding to the radiation received by the detectors connected to each of the electrodes of the first set and which ensure the serial read-out of the integrated charges, characterized in that these means comprise, integrated on the second semi-conductor substrate and placed in the cryostat:

—two capacitors (C$_{11}$, C$_{12}$, C$_{21}$, C$_{22}$...) and a second MOS transistor (T$_{12}$, T$_{22}$, T$_{32}$...) connected to each electrode of the second set (S$_1$, S$_2$, S$_3$...), the first capacitor (C$_{11}$, C$_{21}$, C$_{31}$...) ensuring the integration of the charges, and the second MOS transistor (T$_{12}$, T$_{22}$, T$_{32}$...) interconnecting the first capacitor and the second capacitor (C$_{12}$, C$_{22}$, C$_{32}$...) so that the charges are distributed among the first and the second capacitor,

—means for ensuring the serial read-out of the level of the charges in the second capacitors (C$_{12}$, C$_{22}$, C$_{32}$...), while in the first capacitors the integration of the charges of the detectors (D$_{21}$, D$_{22}$, D$_{23}$...) connected to the following electrode of the first set takes place.

2. An arrangement according to Claim 1, characterized in that it comprises means (T$_{11}$, T$_{13}$, T$_{21}$, T$_{23}$...) ensuring the level resetting of the first and second capacitors (C$_{11}$, C$_{12}$, C$_{21}$, C$_{22}$...), these level resettings taking place, as to the first capacitors (C$_{11}$, C$_{21}$, C$_{31}$...), after having been connected to the second capacitors, and, as to the second capacitors (C$_{12}$, C$_{22}$, C$_{32}$...), after the read-out of the level of the charges in these second capacitors.

3. An arrangement according to Claim 2, characterized in that said means are constituted by a MOS transistor (T$_{11}$, T$_{13}$, T$_{21}$, T$_{23}$...) connected to each capacitor (C$_{11}$, C$_{12}$, C$_{21}$, C$_{23}$...).

4. An arrangement according to one of Claims 1 to 3, characterized in that the means ensuring the serial read-out of the charges contained in the second capacitors (C$_{12}$, C$_{22}$, C$_{32}$...) are constituted by:

—a second shift register,

—a third MOS transistor (T$_{14}$, T$_{24}$...) acting as a follower, this transistor being connected to each second capacitor C$_{12}$, C$_{22}$...) and to a fourth MOS transistor (T$_{15}$, T$_{25}$...), each fourth MOS transistor (T$_{15}$, T$_{25}$...) being addressed periodically by the second shift register and having a common electrode with the other fourth MOS transistors constituting the output (S) of the arrangement.

5. An arrangement according to one of Claims 1 to 3, characterized in that the means ensuring the serial read-out of the charges are constituted by a charge transfer shift register, in which the charges are transferred to a charge read-out device constituting the output (S) of the photosensitive arrangement.

6. An arrangement according to Claim 5, characterized in that the same level of charges is simultaneously established between the first capacitors (C$_{11}$, C$_{21}$...) and the charge transfer register, the second capacitors being essentially constituted by the capacitances of the storing electrodes of the charge transfer register.

7. An arrangement according to Claim 5, characterized in that the same level of charges is established between the first ($C_{11}$, $C_{21}$...) and second ($C_{12}$, $C_{22}$...) capacitors, and then between the second capacitors and the charge transfer register.

FIG_1

M COLONNES, 1er RESEAU

N LIGNES 2e RESEAU

1er REGISTRE A DECALAGES

MULTIPLEXEUR

0 143 047

# FIG_2

MOYENS D'INTEGRATION

MOYENS DE LECTURE

# FIG_3

# FIG_4